# EUROPEAN PATENT APPLICATION

(11) **EP 4 691 415 A1**
(43) Date of publication of application: **11.02.2026**
(21) Application number: 25194720.6
(22) Date of filing: 07.08.2025
(51) Int. Cl.: A61C 8/00

(54) **DENTAL ABUTMENT SYSTEM AND UNIT COMPRISING ABUTMENT AND IMPLANT**

(30) Priority: 07.08.2024 IT 202400018658
(71) Applicant: Bionica S.r.l., 36016 Thiene (VI) (IT)
(72) Inventor: GASPARON, Ugo, 36016 Thiene (VI) (IT)
(74) Representative: Bruni, Alessandro

(57) **Abstract**

The present invention relates to an abutment system adapted to be connected or constrained to a dental implant, comprising a head (5) defining a seat (SE) with a configuration at least partially spherical, a connection element (6) mountable at least partially within the seat (SE), and a multi-unit abutment or MUA (7).

## Description

### TECHNICAL FIELD OF THE INVENTION

The present invention relates to a new dental abutment system, designed to ensure easy application on dental implants and effective stabilization of the dental arch. The present invention also relates to a new unit comprising, among other things, an abutment and a dental implant.

### PRIOR ART

In the dental field, abutments with different structures and functionalities have been proposed.

Among these, some also include a component defined as multi unit abutment or MUA, which is an abutment specifically designed to adapt to different dental arches.

The MUA screwed onto the implants provided up to now is pre-angled and is connected to copings integral with a tooth or with a dental arch.

However, with such solutions it is not possible to ensure a desired inclination of the prosthetic axis since the MUA is usually pre-inclined by 0°, 17° or 30°.

Document EP 2647347 describes a connection system for dental prostheses in which an MUA, with an external smooth truncated-cone surface, is connected by means of a ball joint to a support fixed to the implant. The sleeve for the prosthesis engages on the MUA, but the system proves complex and makes it difficult to achieve a stable connection between MUA and sleeve that also allows subsequent detachment to access the MUA, if necessary.

### OBJECTS OF THE INVENTION

One object of the present invention is to provide a new dental abutment system as well as a new unit comprising abutment and implant.

Another object of the present invention is to provide a new dental abutment system and a new unit as aforesaid with an MUA that can be inclined as needed depending on the characteristics of the mandibular or maxillary bone of installation, but above all depending on the position where the hole for the passage of the prosthetic fixing screw (prosthetic axis) is desired.

Another object of the present invention is to provide an abutment and a unit as aforesaid that is simple to apply and adjust.

According to one aspect of the invention, there is provided an abutment system according to claim 1.

According to one aspect of the invention, there is provided a unit according to claim 13.

The dependent claims refer to preferred and advantageous embodiments of the invention.

### BRIEF DESCRIPTION OF THE DRAWINGS

Other features and advantages of the invention will become more apparent from the description of embodiments of abutment system and unit comprising abutment and implant, illustrated by way of example in the accompanying drawings in which:
- figure 1 is a perspective view of an abutment system according to the present invention,
- figure 2 shows the abutment system of figure 1 in exploded view,
- figure 3 is a perspective view of the abutment system of figure 1 with MUA inclined relative thereto,
- figure 4 is a sectional view along trace IV-IV of figure 3,
- figure 5 is a front view of the abutment system of figure 1 provided with a coping or sleeve,
- figure 6 is a sectional view, along trace VI-VI, of the abutment system of figure 5 provided with a coping or sleeve, a prosthesis and a connecting element of the coping to the MUA,
- figure 7 is an exploded view of the abutment system of figure 6,
- figure 8 is a sectional view according to trace VIII-VIII of figure 7,
- figure 9 is a front exploded view of the abutment system of figure 1 provided with coping or sleeve, connecting element of the coping to the MUA and anchoring body,
- figure 10 is a front exploded view of a unit with abutment and implant according to the present invention,
- figure 11 is a sectional view along trace XI-XI of figure 10,
- figure 12 shows a step of installing a dental prosthesis by means of abutment system or unit according to the present invention,
- figure 13 is a front view of another abutment system according to the present invention provided with coping or sleeve,
- figure 14 is a sectional view along trace XIV-XIV of figure 13,
- figure 15 is an exploded view of the components of figure 13,
- figure 16 is a sectional view according to trace XVI-XVI of figure 15.

In the accompanying drawings, identical parts or components are designated by the same reference numerals.

### EMBODIMENTS OF THE INVENTION

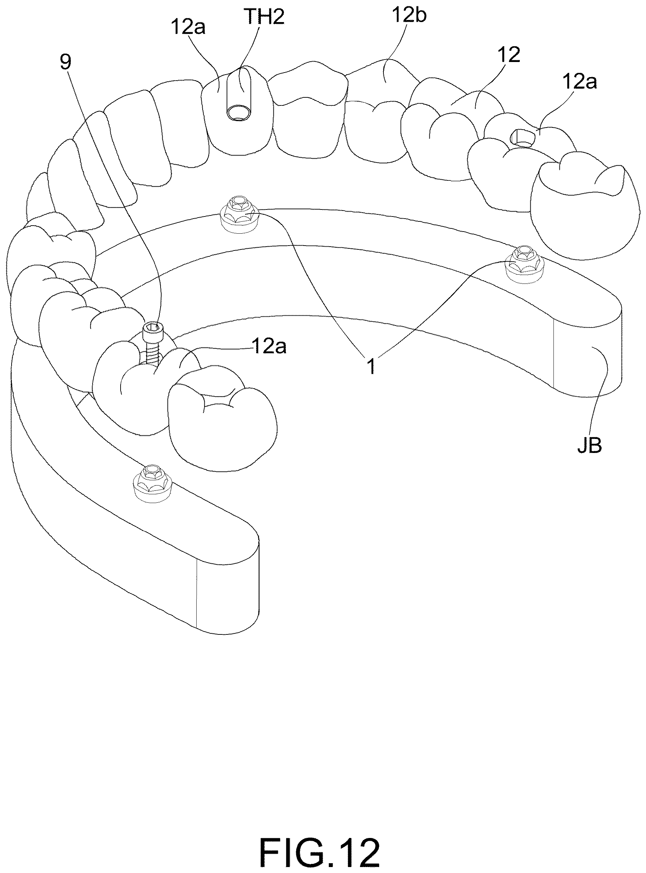

With reference to the figures, a dental abutment system 1 is illustrated, intended to be connected or constrained, removably or not, to or in part in one piece (at least after an initial manufacturing phase) with a dental implant or anchoring body 2 with a shank 3 engageable in a mandibular or maxillary seat JB (see, for example, figure 12). The abutment system 1 comprises a head 5 defining a seat SE with at least partially spherical configuration.

The head 5 defines in particular a seat SE, in use, open upwards/downwards or away, in use from the shank 3 of the implant or anchoring body 2 or in any case from the end or side of the abutment system 1 to be constrained or connected to an implant 2, so that the head 5 defines a central through opening T1 which opens into the seat SE.

Advantageously, the head 5 has an external configuration substantially curved or partially spherical or substantially of spherical zone.

In the present description, the expression "spherical zone" indicates the portion of spherical surface comprised between two parallel planes intersecting a respective sphere (ideal, not real or rather not physically present).

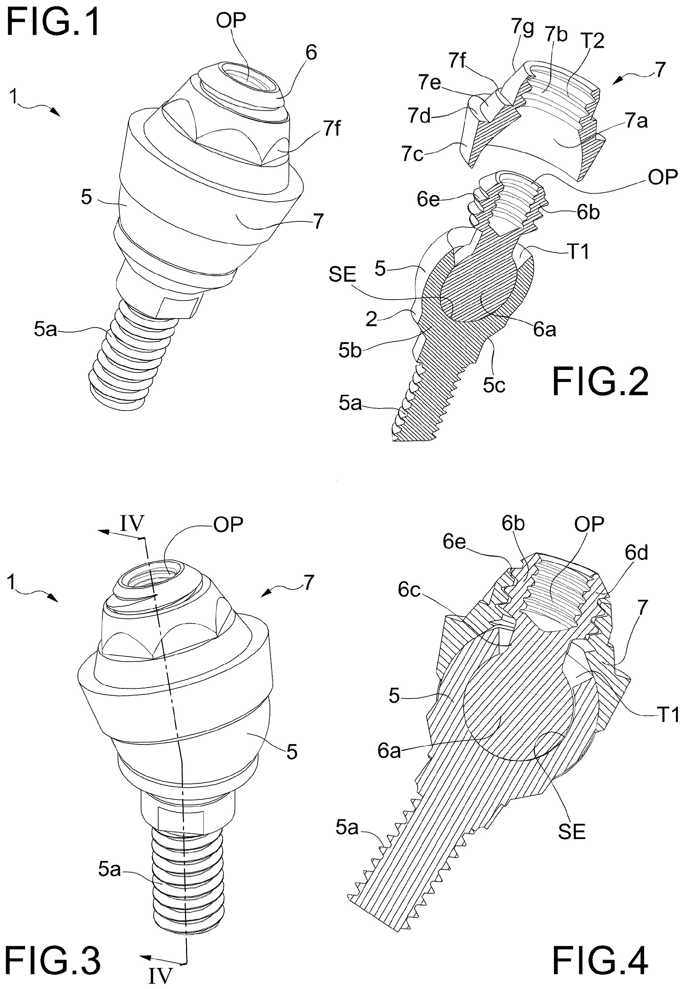

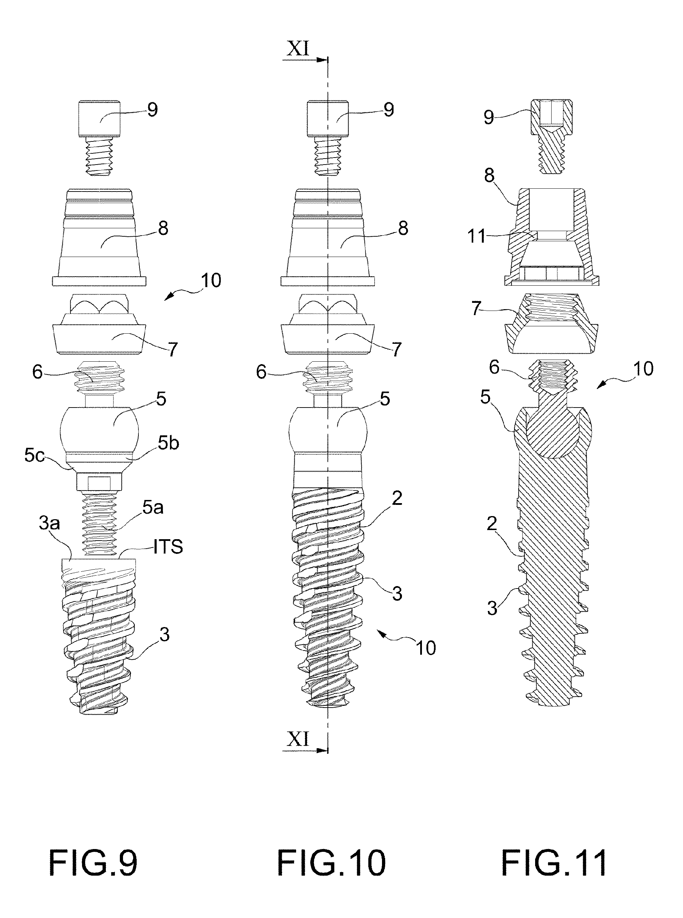

According to the embodiment illustrated in figures 1 to 9, the abutment system 1 is constrainable to an implant or anchoring body 2, for example by screwing, press-fitting or otherwise (see in particular figure 9).

More particularly, the shank 3 defines in this case a main seat, optionally internally threaded ITS.

The head 5 of the abutment system 1 instead is integral or in one piece (at least after an initial manufacturing phase) with a stem 5a, optionally externally threaded and of smaller width or cross-section than the main seat, optionally internally threaded ITS, for insertion into the latter and thus constraining the head 5 of the abutment system 1 to the shank 3 of the implant 2.

Optionally, a connecting portion 5b is provided between head 5 and stem 5a, with a shoulder 5c defined between stem 5a and connecting portion 5b, since the stem 5a has smaller section than the connecting portion 5b. In such case, the component including head 5 and stem 5a of the abutment system 1 would abut against the shank 3 of the implant 2, or rather against face 3a of the latter in which the access to the main seat ITS is defined, at the shoulder 5c.

The embodiment of figures 10 and 11 instead shows a unit 10 for installation or fixing or connection of a dental prosthesis with abutment and implant according to the present invention, according to which the anchoring body 2 is in one piece with the head 5, so that shank 3 and head 5 are obtained together by welding, screwing, turning from a single piece, molding, gluing, friction fitting or other method.

In substance, the expression "in one piece" is to be referred not necessarily to an initial manufacturing phase, but to a phase prior to insertion or use, even if they have possibly been made separately (this also applies to head 5 and stem 5a).

Clearly, a unit 10 for installation or fixing or connection of a dental prosthesis according to the present invention may also be obtained starting from an abutment system 1 of figures 1 to 9 connected or mounted on implant 2, thus without the head 5 in one piece with the shank 3.

The abutment system 1 (figures 1 to 9) or the unit 10 (figures 9 to 11) then includes at least one connecting element 6 mountable at least partially within the seat SE with at least partially spherical configuration, so that the connecting element 6 is movable or rotatable within said seat SE.

Thus, for example, it is possible to incline the axis of the connecting element 6 with an inclination angle optionally comprised between about -50° and about +50°, for example between about -30° and +30° with respect to the longitudinal axis of the stem 5a or of the shank 3 of the anchoring body 2.

It is specified that the connection element 6 may advantageously be, in addition to being inclined with respect to the longitudinal axis of the stem 5a or of the shank 3 of the anchoring body 2, also rotated at any angle, for example between 0° and 360° around said longitudinal axis, performing a precession motion around the same longitudinal axis.

The at least one connection element 6 has a base portion 6a and a rod or projection portion 6b extending from the base portion 6a and optionally with a substantially rectilinear development. The base portion 6a has a substantially spherical or partially spherical configuration for ball joint engagement with the seat SE with at least partially spherical configuration (see, for example, figure 2).

Preferably, the rod or projection portion 6b defines a cavity OP open at its distal end from the base portion 6a.

Even more preferably, the rod or projection portion 6b is internally threaded at the cavity OP, so as to accommodate the fixing element intended to secure the link or coping to be described later.

Advantageously, the rod or projection portion 6b comprises, away from the base portion 6a, a first section 6c and then a second section 6d with larger cross-section than the first section 6c and defining said cavity OP (see, for example, figure 4).

Preferably, the rod or projection portion 6b has at least one externally threaded section 6e, optionally only at section 6d.

In this regard, the base portion 6a could be configured as a "spherical segment," i.e. at least a portion of a spherical body comprised between two parallel surfaces, such as a discoid element, or a portion of a sphere such as a spherical cap.

Alternatively, the base portion 6a could have a central section with two, three, four or more projecting portions or petals therefrom, for example angularly offset from one another, optionally two petals at 180° from each other or four petals at 90° from each other or radial. The projecting sections or petals could have a curved configuration, i.e. as semi-spherical segments.

For insertion of the base portion 6a into the seat SE defined by the head 5, the base portion 6a could be insertable through the central through opening T1, for example by aligning the spherical segment of the base portion 6a or respective petals thereof with one or more respective grooves defined in the head 5 and opening at the central through opening T1, and then, once the base portion 6a is within the seat SE, rotating the base portion 6a so as to misalign the spherical segment or the petals of the base portion 6a from the groove(s). In such case, an assembly similar to a bayonet connection would be obtained.

According to an alternative embodiment, the head 5 could comprise several portions, for example two specular or asymmetric portions, possibly permanently constrained together, for example by gluing or welding, so as to allow insertion of the base portion 6a of the connection element 6 inside the seat SE before assembly of the head 5.

In the case where the head 5 and the optional stem 5a or between the head 5 and the shank 3 are not made in one piece, but result as such after an initial manufacturing phase, the connection element 6 could be placed between head 5 and stem 5a (see the embodiment of figures 1 to 9) or between head 5 and shank 3 (see the embodiment of figures 10 and 11) before their connection, and then head 5 and stem 5a, or head 5 and shank 3, could be connected, optionally glued or welded together with the connection element 6 interposed, so that once connection/welding is completed, the connection element 6 is located, at the respective base portion 6a, within the seat SE, while the rod or projection portion 6b extends through the central through opening T1, outside the seat SE.

In any case, according to one embodiment, the base portion 6a is insertable, preferably removably, into the seat SE, but after insertion is movable or displaceable so as to obtain a stable assembly or retention within the seat SE, unless by way of a backward movement or displacement of a connection element relative to a seat SE.

In this regard, means or a configuration of removable retention (such as the bayonet-like connection described above) are provided for each connection element 6 within a seat SE, so as to allow that the connection element 6 be movable or rotatable within a respective seat SE with inclinations within a predetermined range, without clearly completely exiting the seat SE.

The abutment system 1 or the unit 10 is then provided with at least one multi unit abutment or MUA 7 internally defining, from one end to the other away, in use, from the head 5 or from the stem 5a or from the shank 3, an internal surface 7a partially spherical or substantially configured as spherical zone so as to engage or be able to engage slidably or rather rotatably on the external surface of the head 5 (having the base portion 6a inside it) and thus delimiting a central through opening T2 in which the rod or projection portion 6b of the at least one connection element 6 is insertable and engageable.

Advantageously, the MUA 7 comprises an internally threaded section 7b at the respective central through opening T2 for screw engagement with the at least one externally threaded section 6e of the rod or projection portion 6b.

The mobility of the connection element 6, previously described, ensures the possibility of inclining the MUA 7 as needed depending on the characteristics of the mandibular or maxillary bone of installation, but above all depending on the position where the hole for passage of the prosthetic fixing screw (prosthetic axis) is desired.

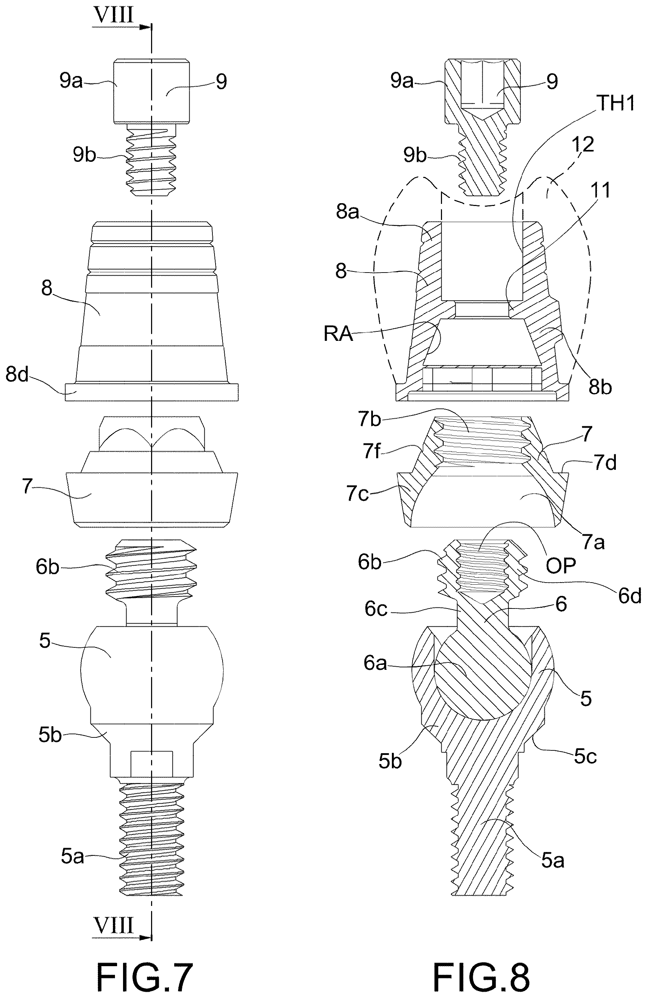

The MUA 7 is therefore substantially annular or tubular. In particular, the MUA 7 is made as a single and monolithic body (see, for example, the sectional views of figures 2 and 8).

The MUA 7 is externally of truncated-cone shape or of multiple truncated-cone sections, so as to allow, thanks to the conicity, to fit sleeves or links non-parallel to each other even by 44°.

In the case of the present invention, the MUA 7, thanks to the specific structure of the abutment system 1, in addition to having this property, also has that of being able to position the central through opening T2, which defines a "prosthetic axis," as desired, so as to allow positioning inside a molar or inside a canine or to avoid the cusps.

With regard to this aspect, in use, after having mounted the connection element 6 in the seat SE, the MUA 7 is mounted in such a way that the rod or projection portion 6b is engaged in the central through opening T2 and the head 5 within the internal surface 7a partially spherical or substantially configured as spherical zone. In particular, the internal surface 7a is in abutment, at least partially, against the external surface of the head 5.

Clearly, the cavity OP, if provided, is open and accessible from an area opposite or distal from the stem 5a or from the implant or anchoring body 2, with the rod or projection portion 6b inserted into the central through opening T2.

Preferably, the rod or projection portion 6b is engaged or screwed so as to reach and, optionally, exceed or project beyond the MUA 7 or the end thereof distal from the stem 5a or from the anchoring body 2.

The MUA 7 is configured as a solid of revolution around an axis of symmetry, not shown in detail in the attached figures.

It is reiterated that the MUA 7 is a part of the abutment system 1 specifically designed to adapt to different dental arches, with possibility of insertion up to non-parallelisms even of about 44°.

With specific reference to the non-limiting embodiment illustrated in the figures, the MUA 7 externally comprises, from one end to the other, away from the head 5 or from the stem 5a or from the shank 3, a first portion 7c with constant or slightly increasing diameter or cross-section, then a first shoulder 7d (abutment for the coping or bonding link) facing away from the stem 5a or from the shank 3 and thus with end of connection with the first portion 7c of larger diameter than the other end of connection with the other portions. After the first shoulder 7d, still away from the head 5 or from the stem 5a or from the shank 3, there is provided a second portion 7e with decreasing diameter or cross-section and then optionally a second shoulder 7f still facing away from the stem 5a or from the shank 3 and a third portion 7g with decreasing diameter or cross-section, optionally curved.

The second shoulder 7f actually defines a hexagonal gripping seat for a tool for engagement, for example for screwing the MUA 7 with the connection element 6 (see figure 1). The same could clearly be absent, in which case to facilitate the engagement of the MUA 7 grooves or another system could be used.

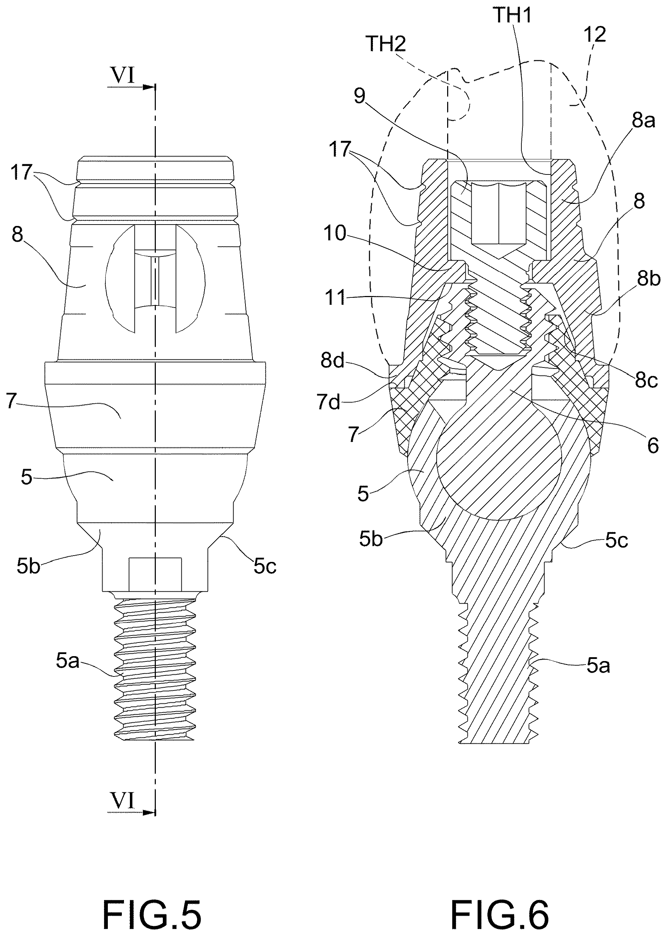

The abutment system 1 (see figures 1 to 9) or the unit 10 (see figures 9 to 11) is then advantageously provided with at least one fixing element 9 intended to engage, with interposition of the sleeve or coping 8, the cavity OP of the rod or projection portion 6b so as to press and tighten a dental prosthesis or said at least one sleeve or coping 8 mounted inside it on and towards the at least one MUA 7 (see, for example, figures 6, 8 and 11).

The fixing element preferably comprises a screw 9. Optionally, said screw 9 has a head 9a and a shank 9b, optionally externally threaded. The head 9a preferably has a size or section greater than the shank 9b (see figure 8).

Optionally, the abutment system 1 is then provided with at least one sleeve or coping or link 8 mounted, optionally glued, as an internal lining of the wall defining a through hole in a dental prosthesis, which sleeve or link 8 is mountable on the at least one MUA 7, preferably in a plurality of different positions.

In any case, the fastening element 9 is designed to engage, for example by screwing, interlocking, coupling, or in another way, the cavity OP of the rod or projecting portion 6b, with possible interposition of the sleeve or coping 8, so as to fix or connect, optionally removably, a dental prosthesis to one or more anchoring bodies 2 and therefore to a mandibular or maxillary bone JB in which they are engaged or inserted.

More specifically, each fastening element 9 can be inserted into a respective through hole TH1 defined by a sleeve or coping or bonding link 8 in order to engage the cavity OP and press against a respective portion of the sleeve or coping 8, thereby obtaining the fastening or connection action just described. Optionally, to reach hole TH1, the fastening element 9 should pass through a hole TH2 defined by a dental prosthesis, in which the sleeve 8 is arranged.

As for the bonding sleeve or link 8, it comprises a tubular or frustoconical body defining an axial through lumen or opening, preferably with a circular cross-section, with a variable diameter from one end to the other of the sleeve or coping or link 8.

In use, the axial lumen or opening defined by the sleeve or coping 8 is aligned with the cavity OP, so that a fastening element 9 inserted into the sleeve or copying or link 8 can reach and engage, preferably with its own shank 9b, optionally externally threaded, the cavity OP.

The coping or bonding sleeve or link 8 preferably defines, at its internal axial lumen or opening, a shoulder 11, annular or otherwise, facing outward (the term "outward" referring to the condition of the prosthesis assembled or mounted on a mandibular or maxillary bone JB, i.e., facing away from it). The shoulder 11 is designed to abut and rest at least partially against the fastening element, such as a screw or similar 9, in particular against the head 9a of the screw 9, while the shank 9b passes through or beyond the shoulder to reach the cavity OP, so that by tightening, optionally by screwing, the fastening element 9, it is possible to press and clamp the at least one sleeve or coping 8 onto and toward the at least one MUA 7, thereby clamping the dental prosthesis 12 against the mandibular or maxillary bone JB.

More specifically, the sleeve 8 could have an internal configuration such as to define a thickening forming a shoulder 11 intended to abut and rest at least partially against the at least one fastening element 9.

In this regard, the sleeve 8 may comprise a main portion 8a with constant, increasing, or decreasing internal diameter or cross-section, and then a terminal portion 8b with an internal diameter or cross-section that, moving away from the main portion 8a, increases, thereby defining a receiving area RA for part of the MUA 7. The MUA 7 therefore does not reach or is not housed in the main portion 8a.

The thickening, if provided, can be arranged between the main portion 8a and the terminal portion 8b.

Optionally, externally to the terminal portion 8b, a rib 8c is provided, for example annular.

The terminal portion 8b defines a free end, which may optionally be flanged 8d or substantially L-shaped.

Moreover, projections or grooves 17 may be provided, for example annular and mutually spaced, which extend externally from or internally into the sleeve or coping 8, in particular at the main portion 8a, in order to increase the connection with an artificial tooth or teeth of a prosthesis in which it is housed.

The at least one sleeve or link 8 can be made of any suitable material, for example titanium, zirconium, polymers, PMMA, PEK, chromium-cobalt, etc.

The at least one sleeve or link 8 may have any suitable thickness, for example a few (optionally one, two, or between one and five) tenths of a millimeter, except possibly in the area of the shoulder 11.

As for the length of a sleeve or link 8, it substantially corresponds to or is slightly less than that of a tooth to be internally lined.

In use, the sleeve or coping or link 8, or more precisely its terminal portion 8b, is mounted on or around the MUA 7, such that part of the MUA 7 lies in the receiving area RA defined in the sleeve or coping or link 8 for the MUA 7, while the remaining part of the MUA 7 projects from said receiving area RA and is in rotational engagement with the head 5.

In this regard, the free end 8d of the sleeve 8 is or comes to rest against the first step 7d of the MUA 7, part of the outer surface of the terminal portion 8b is or comes to rest or abut against the second portion 7e of the MUA, while the rib 8c is or comes to rest against the second step 7f of the MUA 7.

The abutment system 1, or more precisely the unit 10 (see figures 9 to 11), preferably also includes a dental prosthesis 12 comprising one or a plurality of artificial teeth 12a, 12b mutually connected, at least one tooth defining a respective through hole TH2, the at least one bonding sleeve or link 8 being placed internally or as an internal lining of the prosthesis wall defining a respective through hole TH2, optionally bonded to it.

Preferably, the dental prosthesis 12 comprises a plurality of teeth 12a, 12b, for example any number between two and sixteen, inclusive, so as to reproduce all or part of the upper or lower dental arch of a patient. The teeth 12a, 12b of the dental prosthesis 12 are therefore preferably arranged along a substantially curved line.

The first teeth 12a each defining a through hole TH2 are optionally alternated with second teeth 12b that do not define an axial hole; for example, proceeding from one end to the other of the dental prosthesis 12, there may be two, three, four, or more first teeth 12a in succession, then a second tooth 12b, then again two, three, four, or more first teeth 12a, another second tooth 12b, and so on.

It will be understood that the dental prosthesis 12 is preferably made specifically for a patient, optionally shortly before being installed or mounted, and therefore it is not part of the implant components that are mass-produced and sold, which in fact, in the vast majority of cases, do not include a dental prosthesis 12.

According to a less preferred variant, no coping or link 8 is provided, but one or more through holes TH2 of the dental prosthesis 12 are suitably shaped internally (provided, among other things, with a shoulder) so as to act as a coping or link 8 to be mounted on the MUA 7.

With one or a series of abutment systems or units according to the present invention, it is possible to carry out a new method of attachment or installation and achievement of a dental prosthesis, as schematically shown in figure 12. The method is clearly performed manually by a dentist, dental surgeon, or operator.

In this regard, first, the shank 3 of a series, for example two, three, four, or more implants or anchoring bodies 2, is inserted or fixed, optionally screwed, into a mandibular or maxillary bone JB of a patient at which the dental prosthesis 12 is to be installed or mounted. Clearly, the shanks 3 are inserted spaced apart, in particular spaced in the same way as the through holes TH2 in the dental prosthesis 12.

In such a case, in the seats SE of the anchoring bodies 2, respective connection elements 6 are mounted, either before or after insertion into the bone JB.

The heads 5 remain at least partially projecting from the bone JB. In this regard, after mounting or inserting the anchoring bodies 2, the central through openings T1 are open or accessible from the outside to reach the connection elements in the seats SE.

At this stage, the connection elements 6 are oriented randomly.

As indicated above, if the head 5 and the shank 3 are not in a single piece, the connection element 6 is placed between the head 5 and the shank 3 before their connection, and then the head 5 and shank 3 are connected, optionally glued or welded together, with the connection element 6 interposed, so that after connection/welding, the connection element 6 is located within the seat SE and is accessible or engageable through the central through opening T1.

Clearly, if an abutment system 1 with a stem 5a is provided, then the connection element 6 can be mounted in the seat SE starting from the central through opening T1, or it can be placed between the stem 5a and the head 5 before their connection, and then the head 5 and the stem 5a are connected, optionally glued or welded together, with the connection element 6 interposed, so that after connection/welding, the connection element 6 is located within the seat SE and is accessible or engageable through the central through opening T1.

In such a case as well, the abutment system 1 is then mounted or connected, optionally by screwing, to an implant 2, either before or after it has been inserted into the bone JB.

The MUAs 7 are then mounted so as to bring their own through opening T2 into engagement, optionally by screwing, with the rod or projecting portion 6b.

Subsequently, the dental prosthesis 12 is brought above the mandibular bone or below the maxillary bone JB until the through holes TH1 defined by the sleeves 8 are substantially aligned with the heads 5 with the MUAs 7 projecting from the mandibular or maxillary bone JB, and then the prosthesis 12 is brought closer to said bone JB so as to insert the heads 5 with the MUAs 7 each into a respective through hole TH1 and thus engage the sleeve 8 with the MUA.

According to the exemplary embodiment illustrated in the figures, at this stage, the free end 8d of the sleeve 8 is brought into abutment against the first step 7d of the MUA 7, part of the outer surface of the terminal portion 8b into abutment against the second portion 7e of the MUA, while the rib 8c abuts against the second step 7f of the MUA 7.

At this point, with the dental prosthesis 12 abutting against the mandibular or maxillary bone JB and all the heads 5 within a respective through hole TH2 and in contact, at the MUA 7, with an internal end portion of the sleeves 8, a fastening element, such as a screw or the like 9, is inserted into each through hole TH1 or into each sleeve or link 8, starting from their external end 10, distal from the mandibular or maxillary bone JB, until it engages, by screwing, interlocking, coupling, or otherwise, the connection element 6, or more precisely its rod or projecting portion 6b (see figure 8). Each fastening element 9 preferably abuts, for example at its respective head 9a, against a respective shoulder 11 of a corresponding sleeve 8 or through hole TH1, while the shank 9b reaches and engages the cavity OP, so that by tightening or increasing the engagement of the fastening element 9 with the cavity OP, it is possible to clamp the dental prosthesis 12 against the mandibular or maxillary bone JB.

Naturally, as long as the fastening element 9 is not fully tightened, it is possible to tilt the MUA 7 with respect to the anchoring body 2, thanks to the ball-joint engagement between the base portion 6a and the seat SE. This feature can be exploited for adapting the implant to the prosthesis.

The dental prosthesis 12 is thus removably fixed to the mandibular or maxillary bone JB.

Once this method has been carried out and the tightening of the connection element 6 completed, a prosthesis is obtained that is fixed in the correct position, with the axes of the screws or other fastening elements 9 aligned with the internal attachment defined by the connection elements 6.

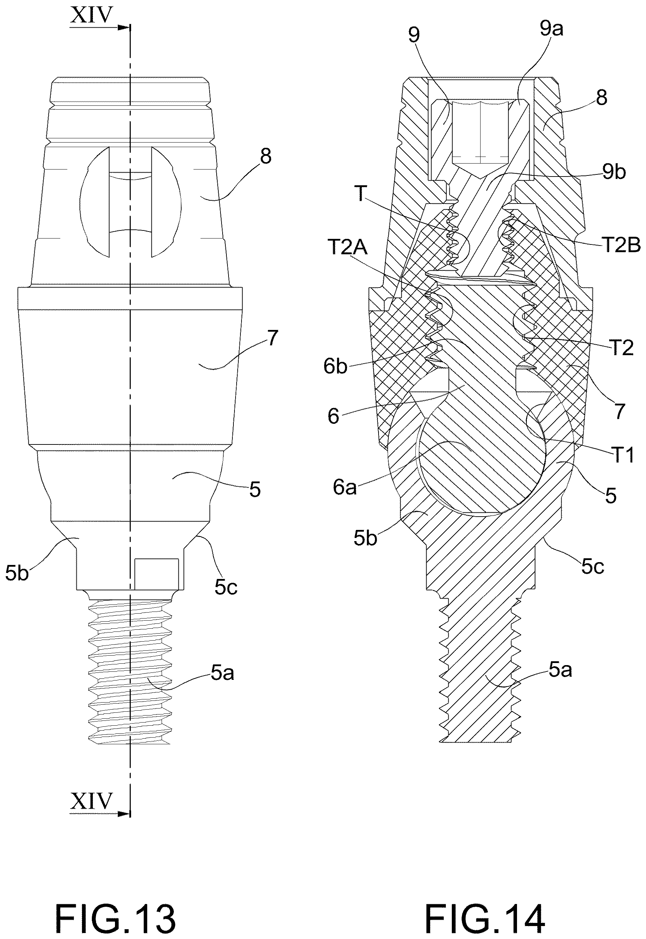

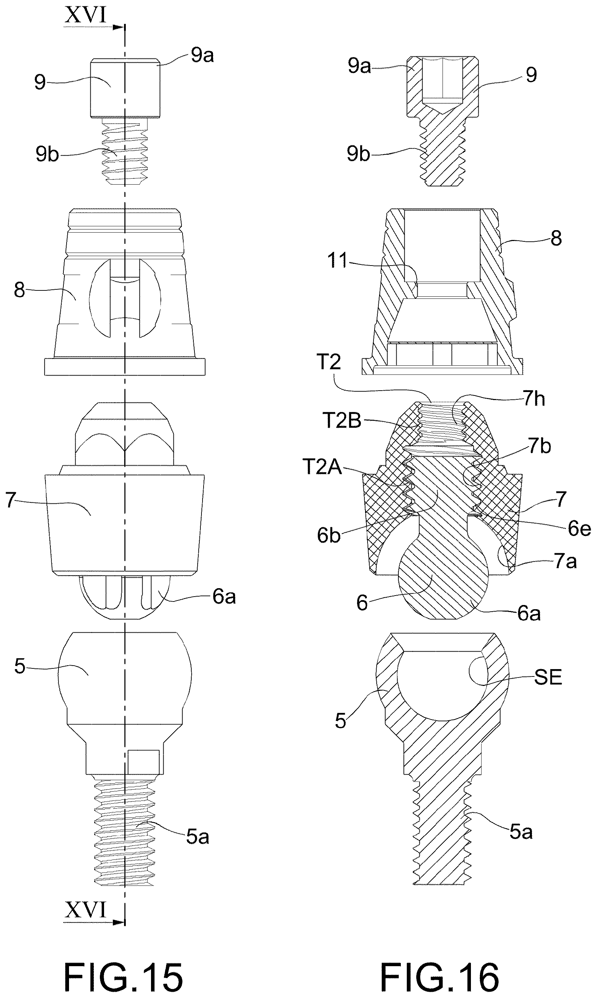

With reference to figures 13 to 17, a variant of abutment system 1 for a unit 10 according to the present invention is illustrated.

In this regard, the connection element 6, or more precisely its rod or projecting portion 6b, does not define a cavity, while the fastening element 9 engages, in particular by screwing, into a hole or cavity, optionally internally threaded, formed or delimited by the MUA 7.

In this respect, the MUA 7 internally defines, from one end to the other, moving away, in use, from the head 5 or from the stem 5a or from the shank 3, an internal surface 7a partially spherical or substantially shaped as a spherical zone, so as to engage or be able to engage slidably, or rather rotatably, the external surface of the head 5 (having the base portion 6a inside it), and then a central through opening T2 having a first part T2A in which the rod or projecting portion 6b of the at least one connection element 6 can be inserted and engaged, and then a second part T2B for engagement with the fastening element 9. With reference to the accompanying figures, it should be noted that the term "part" in relation to the first part T2A and the second part T2B is intended to indicate a section or portion of the central through opening T2, the MUA 7 being made in a single, monolithic body rather than from multiple interconnected parts, as shown in the figures.

Advantageously, the MUA 7 comprises a first internally threaded section 7b corresponding to the first part T2A of the respective central through opening T2, for screw engagement with at least one externally threaded section 6e of the rod or projecting portion 6b, and a second internally threaded section 7h corresponding to the second part T2B of the respective central through opening T2, for screw engagement with the preferably externally threaded shank 9b of the fastening element 9.

Preferably, the second part T2B has a smaller cross-section than the first part T2A, although they may also have the same cross-section, so that the first internally threaded section 7b and the second internally threaded section 7h constitute different and consecutive portions of the same thread.

In this regard, if the second part T2B has a smaller cross-section than the first part T2A, it is possible to use a thread for the second part T2B corresponding to the screws normally used to fix prostheses or bonding links 8.

Clearly, according to this variant, what has been described above concerning the engagement, constraint, or connection between the fastening element 9 and the cavity OP applies to the engagement, constraint, or connection between the fastening element 9 and the second part T2B.

The present invention also relates to a kit for installing, fixing, or connecting a dental prosthesis to a mandibular or maxillary bone, which comprises a plurality of abutment systems 1 or a plurality of units 10, in which case the prosthesis 12 may also be a single piece for two or more abutments 1.

It will therefore be understood that thanks to the present invention a new dental abutment system or a new abutment-implant unit is provided, with an MUA 7 that can be tilted as required according to the characteristics of the mandibular or maxillary bone where it is installed.

Modifications and variants of the invention are possible within the scope of protection defined by the claims

## Claims

1. Abutment system adapted to be connected or constrained to a dental implant, said abutment system comprising:
- a head (5) defining a seat (SE) with a configuration at least partially spherical,
- at least one connection element (6) mountable at least partially within said seat (SE) with a configuration at least partially spherical, such that said connection element (6) is movable or rotatable within said seat (SE), said at least one connection element (6) having a base portion (6a) and a rod or projecting portion (6b) extending from the base portion (6a), said base portion (6a) having a substantially spherical or partially spherical configuration for ball-joint engagement with said seat (SE) having a configuration at least partially spherical,
- at least one multi unit abutment or MUA (7) internally defining, from one end to the other moving away from the head (5), an internal surface (7a) partially spherical or substantially configured as a spherical zone so as to engage or be able to engage slidably or rotatably on the external surface (5a) of said head (5), and then a central through opening (T2) in which the rod or projecting portion (6b) of said at least one connection element (6) is insertable and engageable,
said rod or projecting portion (6b) defines a cavity (OP) open at its distal end with respect to said base portion (6a) for engagement with a fastening element (9),
wherein said rod or projecting portion (6b) is internally threaded at said cavity (OP), or wherein said central through opening (T2) defined by said MUA (7) has a first part (T2A) in which the rod or projecting portion (6b) of said at least one connection element (6) is insertable and engageable, and then a second part (T2B) for engagement with a fastening element (9).

2. Abutment system (1) according to claim 1, wherein said first part (T2A) and said second part (T2B) of said central through opening (T2) are both delimited in said MUA (7), which is made as a single and monolithic body.

3. Abutment system according to claim 1, wherein said MUA (7) comprises a first internally threaded section (7b) corresponding to the first part (T2A) of the respective central through opening (T2) for screw engagement with an externally threaded section (6e) of the rod or projecting portion (6b), and a second internally threaded section (7h) corresponding to the second part (T2B) of the respective central through opening (T2) for screw engagement with an externally threaded shank (9b) of a fastening element (9).

4. Abutment system according to claim 1 or 3, wherein the second part (T2B) has a smaller cross-section than the first part (T2A).

5. Abutment system according to claim 1, 2, 3 or 4, comprising at least one fastening element (9), a screw, adapted to engage said cavity (OP) of said rod or projecting portion (6b) or said second part (T2B) of said central through opening (T2) defined by said MUA (7), so as to press and clamp a dental prosthesis or at least one sleeve or cap (8) mounted as an internal lining of the wall defining a through hole in a dental prosthesis, said sleeve or link (8) being mountable on said at least one MUA (7), onto and toward said at least one MUA (7).

6. Abutment system according to claim 5, wherein said at least one sleeve or link (8) comprises a tubular body defining a lumen or axial through opening, said at least one sleeve or link (8) defining, at its own lumen or internal axial opening, a shoulder (11) facing outward, said shoulder (11) being adapted to abut and bear at least in part against said at least one fastening element (9).

7. Abutment system according to claim 6, wherein said sleeve or link (8) comprises a main section (8a) with constant, increasing, or decreasing internal diameter or cross-section, and then a terminal section (8b) with an internal diameter or cross-section that increases moving away from the main section (8a), defining a receiving area (RA) for said MUA (7).

8. Abutment system according to any of the preceding claims, wherein said rod or projecting portion (6b) comprises, moving away from said base portion (6a), a first section (6c), and then a second section (6d) with a larger cross-section than said first section (6c) and defining said cavity (OP).

9. Abutment system according to any of the preceding claims, wherein said rod or projecting portion (6b) has at least one externally threaded section (6e), while said at least one MUA (7) comprises an internally threaded section (7b) for screw engagement with said at least one externally threaded section (6e) of the rod or projecting portion (6b).

10. Abutment system according to any of the preceding claims when dependent on claim 5, comprising a dental prosthesis (12) including one or a plurality of artificial teeth (12a, 12b) mutually constrained, at least one tooth (12a) defining a respective through hole (TH2), said at least one sleeve (8) being positioned internally or as an internal lining of the wall of the prosthesis defining a respective through hole (TH2).

11. Abutment system according to any of the preceding claims, wherein said MUA (7) comprises externally, from one end to the other moving away from the head (5), a first portion (7c) with constant or slightly increasing diameter or cross-section, then a first shoulder (7d) facing away from the shank (3) and thus with an end of connection to the first portion (7c) having a greater diameter than the other end of connection to the other portions, after the first shoulder (7d), still moving away from the head (5), there is a second portion (7e) with decreasing diameter or cross-section, and then a second shoulder (7f) again facing away from the shank (3), and a third portion (7g) with decreasing diameter or cross-section.

12. Abutment system according to claims 7 and 11, wherein a free end (8d) defined by said terminal section (8b) of the sleeve (8) abuts against the first shoulder (7d) of the MUA (7), and part of the external surface of the terminal section (8b) abuts or bears against the second portion (7e) of the MUA.

13. Unit for installation, fixing, or connection of a dental prosthesis comprising:
At least one implant or anchoring body (2) with a shank (3) engageable in a mandibular or maxillary seat (JB),
an abutment system according to any of the preceding claims 1-12, wherein said head (5) is formed in one piece with said at least one implant or anchoring body (2) or is connected thereto.

14. Unit according to claim 13, wherein said shank (3) defines a main seat (ITS), while said head (5) is integral or in one piece with a stem (5a) of smaller width or cross-section than the main seat (ITS), for insertion therein and thus for constraining the head (5) of the abutment system to the shank (3) of the implant or anchoring body (2).

15. Kit for installation, fixing, or connection of a dental prosthesis comprising a plurality of abutment systems according to any of the preceding claims 1-12 or a plurality of units according to claim 13 or 14
